# FASCICULE DE BREVET EUROPEEN

(11) **EP 3 049 789 B1**
(45) Date de publication et mention de la délivrance du brevet: **17.04.2019**
(21) Numéro de dépôt: 14777041.6
(22) Date de dépôt: 24.09.2014
(51) Int. Cl.: G01M 17/02

(54) **DISPOSITIF DE MAINTIEN ET D'ENTRAÎNEMENT EN ROTATION DESTINÉ À L'INSPECTION VISUELLE D'UN PNEUMATIQUE ET PROCÉDÉ ASSOCIÉ**
STÜTZE UND DREHVORRICHTUNG ZUR VISUELLEN PRÜFUNG EINES REIFENS UND ZUGEHÖRIGES VERFAHREN
SUPPORT AND ROTATION DEVICE FOR THE VISUAL INSPECTION OF A TIRE AND ASSOCIATED METHOD

(30) Priorité: 26.09.2013 FR 1359265
(43) Date de publication de la demande: 03.08.2016
(73) Titulaire: Compagnie Générale des Etablissements Michelin, 63000 Clermont-Ferrand (FR)
(72) Inventeur: LEOBAL, Christian, F-63040 Clermont-Ferrand Cedex 09 (FR); CHARLAT, Julien, F-63040 Clermont-Ferrand Cedex 09 (FR)
(74) Mandataire: Roussy, Delphine
(86) Numéro de dépôt international: PCT/EP2014/070357
(87) Numéro de publication internationale: WO 2015/044195

(56) Documents cités:
- EP-A1- 1 808 686
- FR-A1- 2 754 896
- FR-A1- 2 957 417

## Description

La présente invention concerne le domaine du contrôle visuel des pneumatiques.

Plus particulièrement, l'invention concerne les dispositifs utilisés pour assurer le maintien et l'entraînement en rotation des pneumatiques afin de réaliser des opérations de contrôle visuel des surfaces de ces derniers.

L'inspection visuelle est largement développée dans le processus de fabrication des pneumatiques et fait encore le plus souvent appel à la dextérité des opérateurs chargés de vérifier l'absence d'imperfections visibles à la surface des pneumatiques pour s'assurer de leur conformité.

Cependant, avec l'avancée de la puissance de calcul des moyens informatiques, les manufacturiers de pneumatiques développent des moyens de contrôle automatique pour assister les opérateurs chargés du contrôle visuel. Dans ce but, il est possible d'utiliser un appareil d'inspection comprenant des moyens d'éclairage et des caméras disposés de sorte à balayer des zones extérieure et intérieure des bourrelets latéraux et de la bande de roulement du pneumatique à contrôler. Le champ de prise de vues de chaque caméra est limité angulairement. Pour obtenir des images complètes de l'intérieur et de l'extérieur du pneumatique, il convient d'entraîner en rotation le pneumatique autour de son axe par rapport aux moyens d'éclairage et aux caméras. Les images numériques obtenues sont alors traitées et comparées avec des images de référence afin de déterminer les éventuelles anomalies de surface et d'aspect du pneumatique. Pour plus de détails, on pourra par exemple se référer aux demandes de brevet EP-A2-1 959 227, EP-A1-2 023 078 et EP-A1-2 172 737.

Pour réaliser une telle inspection, il convient d'utiliser un dispositif assurant un maintien précis lors de l'entraînement en rotation du pneumatique. On connait, par le document US2008/0066532, un dispositif d'entraînement comprenant une pluralité de paires de crochets venant appuyer contre les faces internes des bourrelets latéraux du pneumatique de sorte à les écarter l'un relativement à l'autre. Les crochets sont mobiles entre une position d'engagement pour le maintien et l'entraînement en rotation du pneumatique et une position repliée pour permettre l'introduction et l'extraction du pneumatique.

Ce dispositif a pour inconvénient majeur de ne pas permettre la réalisation d'images des faces internes des bourrelets latéraux du pneumatique dans les zones d'appui des crochets. Ainsi, ces zones masquées ne peuvent pas être contrôlées sans avoir au préalable repositionné angulairement le pneumatique par rapport aux crochets.

Pour remédier à cet inconvénient, les demandeurs ont développé un système de maintien et d'entraînement comprenant une virole de centrage d'un premier bourrelet latéral du pneumatique, des crochets de verrouillage dudit bourrelet sur la virole, deux rouleaux de maintien intérieur montés en appui contre la face interne du second bourrelet latéral du pneumatique, et un rouleau de maintien extérieur en appui contre la face externe du second bourrelet situé circonférentiellement entre les rouleaux de maintien intérieur. Pour plus de détails, on pourra se référer à la demande de brevet WO-A1-2011/113711.

L'utilisation des rouleaux de maintien intérieur et extérieur permet l'acquisition d'une image intérieure du pneumatique avec une grande précision géométrique. De sorte à minimiser les mouvements du second bourrelet latéral du pneumatique pendant l'opération d'acquisition d'images, le système comprend également des rouleaux de relevage montés en appui contre la face interne du second bourrelet de sorte à retourner axialement ledit bourrelet dans un secteur circonférentiel complémentaire au secteur occupé par les rouleaux de maintien intérieur et extérieur.

Un tel retournement axial vers l'extérieur du second bourrelet empêche toutefois d'acquérir simultanément une image extérieure du pneumatique dans la mesure où le bourrelet et le flanc associé sont trop déformés.

Il est ainsi nécessaire de prévoir un système de maintien spécifique additionnel apte à maintenir le pneumatique à l'état gonflé pour obtenir une image extérieure du pneumatique avec une bonne précision géométrique. Ceci augmente sensiblement le temps de cycle nécessaire à l'inspection visuelle du pneumatique ainsi que le coût associé. D'autres documents de l'état de la technique peuvent être cités: par exemple le document FR 2 957 417 concerne le domaine de la fabrication des pneumatiques, et le domaine du contrôle visuel de ces derniers en cours ou en fin de processus de production. En outre, le document EP 1 808 686 concerne un dispositif d'inspection pour des objets creux comme des des pneumatiques. De plus, le document FR 2 754 896 concerne un dispositif de contrôle de la caractéristique d'un talon de pneumatique de véhicule par mesure de la force de résistance.

La présente invention vise à remédier à ces inconvénients.

Plus particulièrement, la présente invention vise à prévoir un dispositif de maintien et d'entraînement en rotation d'un pneumatique adapté pour pouvoir acquérir l'image de l'intérieur et de l'extérieur du pneumatique de façon simultanée

La présente invention vise également à prévoir un dispositif permettant d'obtenir un centrage, un maintien et un entraînement en rotation de façon stable, précise et répétitive.

Dans un mode de réalisation, le dispositif est destiné au maintien et à l'entraînement en rotation d'un pneumatique du type comprenant une bande de roulement et des premier et second bourrelets latéraux. Le dispositif comprend des moyens de centrage aptes à permettre le centrage du premier bourrelet latéral du pneumatique, des moyens de verrouillage aptes à verrouiller ledit bourrelet dans la position centrée, des moyens d'entraînement aptes à entraîner en rotation le pneumatique autour de son axe, et au moins un module de préhension et de centrage du second bourrelet latéral du pneumatique. Ledit module est pourvu d'au moins un galet d'écartement interne apte à venir axialement en appui contre la face interne du second bourrelet latéral, d'au moins un galet de maintien externe apte à venir axialement en appui contre la face externe opposée dudit second bourrelet, lesdits galets d'écartement et de maintien s'étendant sensiblement radialement, et d'au moins un galet de centrage apte à venir radialement en appui contre ledit second bourrelet latéral et s'étendant sensiblement axialement.

Grâce au dispositif, il est possible d'obtenir un écartement et un maintien axial du bourrelet associé aux galets tout en assurant un bon centrage radial dudit bourrelet. Le centrage radial est obtenu par la présence du ou des galets de centrage. En outre, la présence de tel(s) galet(s) de centrage permet de pouvoir maintenir radialement le bourrelet du pneumatique dans une position stable fermée et légèrement écartée axialement. Pour obtenir un maintien et un entraînement en rotation de façon stable, précise et répétitive, il n'est donc pas nécessaire de prévoir le retournement axial du bourrelet comme cela est le cas dans l'état de la technique antérieure.

Avec le dispositif, il devient ainsi possible de maintenir le pneumatique dans une position dans laquelle son profil se rapproche de celui obtenu à l'état gonflé. Ceci permet de pouvoir acquérir à la fois l'image de l'intérieur et de l'extérieur du pneumatique de façon simultanée sur un seul poste.

De préférence, ledit module de préhension et de centrage comprend au moins deux galets de centrage qui peuvent être disposés circonférentiellement de part et d'autre du galet d'écartement interne.

Avantageusement, le ou les galets de centrage sont aptes à venir radialement en appui contre l'alésage du second bourrelet latéral du pneumatique. Le ou les galets de centrage peuvent être cylindriques.

De préférence, le galet d'écartement interne dudit module est mobile axialement en translation par rapport aux galets de maintien externe et de centrage. Ledit module de préhension et de centrage peut comprendre une embase de montage sur laquelle sont montés les galets de maintien externe et de centrage, et une tige montée coulissante sur ladite embase et supportant le galet d'écartement interne.

Dans un mode de réalisation, ledit module de préhension et de centrage comprend au moins deux galets de maintien externe. De préférence, les galets de maintien externe sont disposés circonférentiellement de part et d'autre du galet d'écartement interne. Le galet d'écartement interne peut être disposé sensiblement au milieu d'un secteur angulaire délimité par les deux galets de maintien externe. Ledit module de préhension et de centrage peut comprendre un unique galet d'écartement interne.

Le dispositif peut encore comprendre un plateau fixe sur lequel est monté mobile radialement en translation ledit module de préhension et de centrage.

Dans un mode de réalisation préféré, le dispositif comprend une pluralité de modules de préhension et de centrage du second bourrelet latéral du pneumatique identiques entre eux qui peuvent avantageusement être espacés les uns par rapport aux autres de manière régulière dans le sens circonférentiel.

Dans un mode de réalisation préféré, les moyens de centrage du premier bourrelet latéral du pneumatique comprennent une virole et les moyens de verrouillage comprennent des crochets escamotables montés sur ladite virole.

L'invention concerne également un procédé d'inspection d'un pneumatique du type comprenant une bande de roulement et des premier et second bourrelets latéraux à l'aide d'un dispositif tel que défini précédemment, comprenant les étapes au cours desquelles :
- on centre et on verrouille le premier bourrelet latéral du pneumatique sur les moyens de centrage,
- on réalise un déplacement axial relatif entre le pneumatique et le galet d'écartement interne pour positionner axialement ledit galet à une hauteur différente de celle de la face interne du second bourrelet latéral du pneumatique en étant situé dans l'espace intérieur du pneumatique,
- on déploie radialement le module de préhension et de centrage pour amener le galet de centrage à une cote inférieure au seat du pneumatique,
- on active l'entraînement en rotation du pneumatique,
- on réalise un déplacement axial relatif entre le pneumatique et le galet d'écartement interne pour pincer axialement le second bourrelet latéral du pneumatique entre les galets d'écartement interne et de maintien externe,
- on déploie radialement le module de préhension et de centrage pour amener le galet de centrage radialement en appui contre le second bourrelet latéral à une cote correspondante au seat du pneumatique, et
- on dispose des moyens d'acquisition d'images internes et externes pour acquérir des images de zones angulaires des surfaces interne et externe du pneumatique.

La présente invention sera mieux comprise à la lecture de la description détaillée d'un mode de réalisation pris à titre d'exemple nullement limitatif et illustré par les dessins annexés sur lesquels :
- la figure 1 est une vue schématique en coupe de la partie supérieure d'un dispositif de maintien et d'entraînement en rotation d'un pneumatique selon un exemple de réalisation de l'invention,
- la figure 2 est une vue partielle en perspective de la partie inférieure du dispositif de la figure 1, et
- la figure 3 est une vue en perspective de la partie inférieure du dispositif de la figure 1.

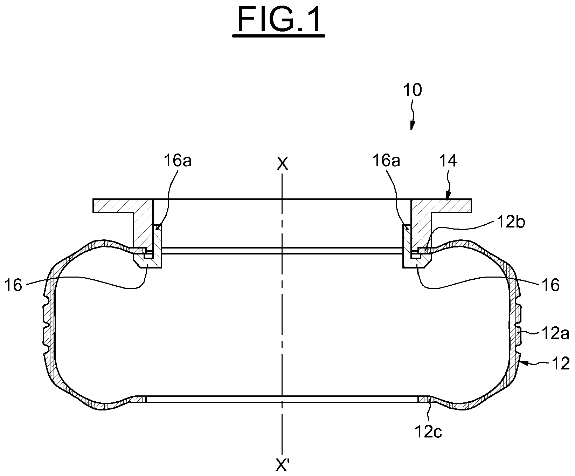

Sur les figures 1 à 3, on a représenté un exemple de réalisation d'un dispositif, référencé 10 dans son ensemble, prévu pour assurer le maintien et l'entraînement en rotation d'un pneumatique 12. Dans l'exemple de réalisation illustré, le pneumatique 12 est entraîné en rotation autour de son axe X-X' dans une position dudit axe supposée verticale. Le pneumatique 12, de forme annulaire, comprend une bande de roulement 12a cylindrique prolongée par des premier et second flancs latéraux opposés comprenant chacun un bourrelet 12b, 12c latéral.

Le dispositif 10 comprend une virole 14 de centrage sur laquelle est monté le premier bourrelet 12b latéral du pneumatique, des crochets 16 de verrouillage dudit bourrelet sur la virole, et un plateau 18 fixe supportant une pluralité de modules 20 de préhension et de centrage du second bourrelet 12c latéral du pneumatique.

Comme illustré à la figure 1, la virole 14 de centrage, coaxiale à l'axe X-X' du pneumatique, présente une forme générale annulaire adaptée pour recevoir le premier bourrelet 12b latéral du pneumatique. La virole 14 de centrage est reliée à un châssis (non représenté) par des roulements de sorte à pouvoir être entraînée en rotation autour de l'axe X-X' par l'intermédiaire d'un pignon motorisé en prise avec une crémaillère (non représentés) prévue sur la périphérie de la virole.

Les crochets 16 sont répartis dans l'alésage de la virole 14 de centrage et sont montés chacun de façon pivotante sur ladite virole autour d'un axe 16a entre une position déverrouillée permettant le montage ou l'extraction du pneumatique et une position verrouillée dans laquelle ils viennent axialement en appui contre la face interne du premier bourrelet 12b latéral pour le maintenir axialement contre la virole. Dans la position verrouillée, le premier bourrelet 12b latéral est pincé axialement entre les crochets 16 et la virole 14 de centrage. Dans la position déverrouillée, les crochets 16 sont basculés radialement vers l'intérieur vers l'axe X-X'. Pour plus de détails sur la conception et la cinématique de la virole 14 et des crochets 16, on pourra se référer à la demande de brevet WO-A1-2011/113711.

Lorsque le premier bourrelet 12b est centré et verrouillé sur la virole 14, la mise en rotation du pneumatique 12 autour de l'axe X-X' s'effectue par actionnement du pignon motorisé agissant sur la crémaillère de la virole. Le pignon motorisé et la crémaillère forment des moyens d'entraînement en rotation. Compte tenu du maintien axial du premier bourrelet 12b du pneumatique contre la virole 14 de centrage réalisé par les crochets 16, l'axe X-X' dudit pneumatique reste confondu avec l'axe de la virole quels que soient les mouvements axiaux et radiaux opérés sur le second bourrelet 12c par les modules 20 de préhension et de centrage.

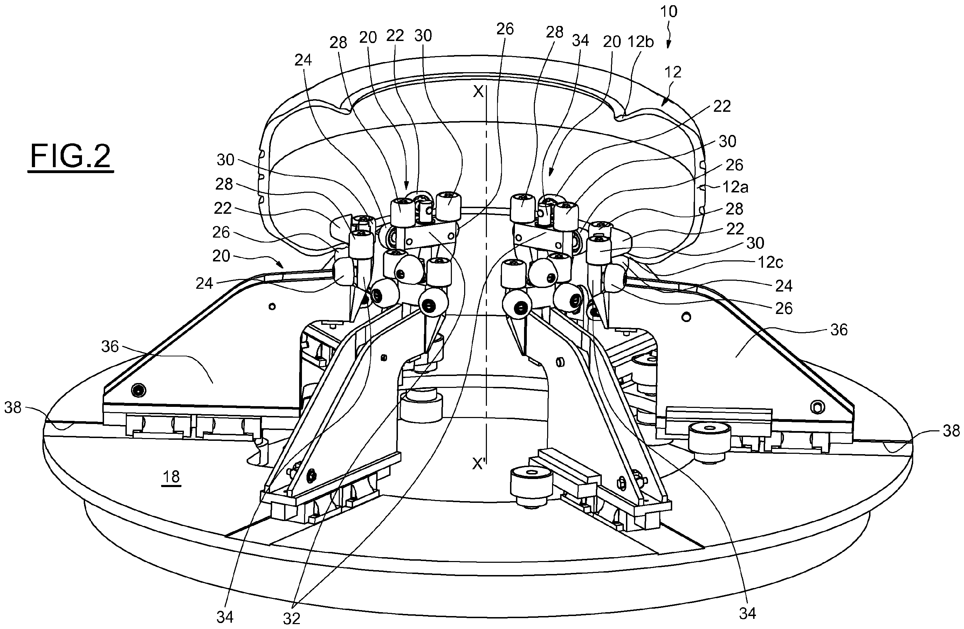

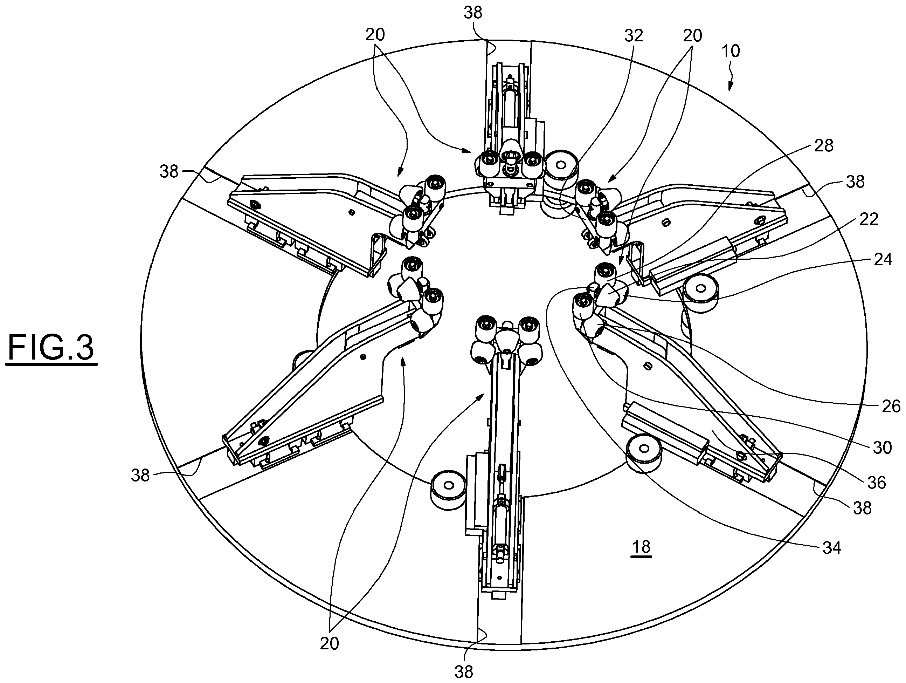

Comme illustré aux figures 2 et 3, les modules 20 de préhension et de centrage sont identiques entre eux et disposés sur le plateau 18 avec un espacement circonférentiel régulier. Les modules 20 sont ici au nombre de six. Le plateau 18 présente une forme annulaire et est fixé sur une table (non représentée).

Dans l'exemple de réalisation illustré, chaque module 20 comprend un galet 22 d'écartement interne, deux galets 24, 26 de maintien externe et deux galets 28, 30 de centrage prévus pour coopérer chacun avec le second bourrelet 12c latéral du pneumatique. Chaque module 20 est également pourvu d'une embase 32 de montage commune sur laquelle sont montés fixes en translation les galets 24 à 30 de maintien externe et de centrage, d'une tige 34 montée de façon coulissante sur ladite embase selon la direction axiale et supportant le galet 22 d'écartement interne, et un cadre 36 sur lequel est fixée l'embase 32. Un ensemble de biellettes (non visibles) est monté sur le cadre 36 pour permettre le déplacement axial de la tige 34. Le galet 22 est mobile axialement entre une position rapprochée par rapport aux galets 24 à 30 et une position éloignée ou déployée.

Le galet 22 d'écartement interne et les galets 24, 26 de maintien externe s'étendent chacun selon un axe orienté radialement et sont montés libres en rotation autour de leurs axes respectifs. Le galet 22 s'étendant radialement est prévu pour venir axialement en appui contre la face interne du second bourrelet 12c latéral du pneumatique. Les galets 24, 26 s'étendant radialement sont prévus pour venir axialement en appui contre le second bourrelet 12c latéral du pneumatique axialement du côté opposé au galet 22. Les galets 24, 26 sont plaqués axialement contre la face externe du second bourrelet 12c. Les galets 24, 26 sont décalés axialement vers le plateau 18, i.e. ici vers le bas, par rapport au galet 22 et disposés circonférentiellement de part et d'autre dudit galet. Le galet 22 est disposé sensiblement au milieu du secteur angulaire délimité par les deux galets 24, 26. On entend par « secteur angulaire », l'angle formé par les rayons passant par l'axe X-X' du pneumatique et reliant les axes des galets 24, 26. L'axe du galet 22 est positionné sensiblement dans le plan radial passant par la bissectrice du secteur angulaire.

Dans l'exemple de réalisation illustré, le galet 22 d'écartement interne présente une surface extérieure tronconique dont la pointe est orientée radialement vers l'extérieur. Ceci favorise l'écartement et le maintien axial du second bourrelet 12c du pneumatique sans détérioration. Les galets 24, 26 de maintien externe présentent une surface extérieure arrondie.

Les galets 28, 30 de centrage s'étendent chacun selon un axe orienté axialement et sont montés libres en rotation autour de leurs axes respectifs. Les galets 28, 30 présentent une surface extérieure cylindrique et sont prévus pour venir radialement en appui contre l'alésage du second bourrelet 12c latéral du pneumatique. La surface extérieure axiale de chaque galet 28, 30 forme une surface de butée radiale pour le bourrelet 12c. Les galets 28, 30 s'étendant axialement sont disposés circonférentiellement de part et d'autre du galet 22. Les galets 24 et 28, respectivement 26 et 30, situés d'un même côté du galet 22 sont situés dans un même plan radial passant par l'axe X-X'.

Le cadre 36 support de chaque module 20 est monté mobile radialement en translation sur le plateau 18. A cet effet, une pluralité de lumières 38 est ménagée sur la face du plateau 18 orientée vers le pneumatique 12 pour permettre le coulissement des cadres. Ce coulissement peut être commandé par tout moyen approprié, par exemple par une crémaillère ou par des vérins. Pour chaque module 20 de préhension et de centrage, les galets 22 à 30 sont mobiles conjointement selon la direction radiale entre une position repliée ou escamotée dans laquelle ils sont situés de sorte à permettre le montage ou l'extraction du pneumatique 12, et une position déployée radialement vers l'extérieur dans laquelle ils viennent en contact avec le second bourrelet 12c du pneumatique. En outre, le galet 22 est mobile axialement relativement aux autres galets 24 à 30 du module 20 par coulissement de la tige 34.

Comme cela sera décrit par la suite, le dispositif 10 comprend encore des moyens d'acquisition d'images internes et externes (non représentés) pour l'inspection visuelle du pneumatique 12. Chaque moyen d'acquisition peut comprendre un moyen d'éclairage de type laser ou lumière de fente formant un plan lumineux et dont l'intersection avec le pneumatique 12 forme un trait, et une ou plusieurs caméras, par exemple matricielles, aptes à capter la lumière réfléchie par le pneumatique 12. Les moyens d'acquisition d'images internes et externes peuvent par exemple être chacun au nombre de trois.

Pour réaliser l'inspection du pneumatique 12 à l'aide du dispositif 10, on procède de la manière suivante. Dans une première étape, on amène la virole 14 de centrage au niveau du premier bourrelet 12b latéral du pneumatique pour centrer ledit bourrelet sur la virole. Ensuite, lors d'une seconde étape, les crochets 16 passent de la position déverrouillée à la position verrouillée pour obtenir le pinçage axial du premier bourrelet 12b radial du pneumatique entre les crochets 16 et la virole 14.

Lors d'une troisième étape, la virole 14 de centrage portant le pneumatique 12 est abaissée axialement en direction du plateau 18 de sorte que les galets 22 d'écartement interne soient situés à une hauteur supérieure à celle de la face interne du second bourrelet 12c latéral et que les galets 24, 26 de maintien externe soient situés à une hauteur inférieure à celle de la face externe du bourrelet. Lors de cette manoeuvre, le galet 22 de chaque module 20 est dans la position axiale déployée par rapport aux galets 14 à 30 du module. En outre, lors de cette manoeuvre, les galets 22 à 30 de chaque module 20 sont dans la position radiale escamotée vers l'axe X-X' du pneumatique pour autoriser le passage des galets 22 d'écartement interne et 28, 30 de centrage dans l'espace intérieur du pneumatique 12 à la hauteur du second bourrelet 12c latéral.

Lors d'une quatrième étape suivante, l'ensemble des cadres 36 s'écarte radialement vers l'extérieur jusqu'à ce que les galets 28, 30 de centrage viennent au voisinage immédiat de l'alésage du second bourrelet 12c latéral du pneumatique tout en restant à distance de celui-ci. Les galets 28, 30 sont déplacés jusqu'à une cote radiale prédéterminée inférieure au seat du pneumatique 12, par exemple inférieure audit seat de 5 millimètres. On entend par « seat du pneumatique», le diamètre intérieur de montage du pneumatique sur la jante associée. A la fin de la phase d'approche des galets, les galets 22 d'écartement interne sont situés dans l'espace intérieur du pneumatique 12 en étant localisés radialement et axialement au-dessus de la face interne du second bourrelet 12c latéral et les galets 24, 26 de maintien externe sont situés hors de cet espace intérieur en étant localisés radialement et axialement au-dessous de la face externe du bourrelet. Lors de cette phase d'approche des galets 22 à 30, le pneumatique 12 est entraîné en rotation autour de son axe X-X'.

Ensuite, lors d'une cinquième étape, on abaisse axialement les galets 22 vers le second bourrelet 12c latéral du pneumatique tout en remontant axialement légèrement le pneumatique par déplacement de la virole 14 de centrage de sorte que les galets 22 soient en appui axial contre la face interne du second bourrelet 12c et écartent axialement vers l'extérieur ledit bourrelet, i.e. axialement du côté opposé au premier bourrelet 12b. Dans cette position, les galets 24, 26 assurent le maintien du second bourrelet 12c par appui axial contre sa face externe. Dans cette position, les galets 24, 26 sont uniquement en appui axial contre la face interne du bourrelet 12c et ne viennent pas en contact radial contre l'alésage dudit bourrelet.

Lors d'une sixième étape suivante, les cadres 36 s'écartent encore radialement vers l'extérieur de sorte à amener radialement en appui les galets 28, 30 de centrage contre l'alésage du second bourrelet 12c latéral du pneumatique. Les galets 28, 30 sont déployés radialement vers l'extérieur jusqu'à une cote radiale qui correspond au seat du pneumatique 12.

Lors d'une septième étape, on arrête l'entraînement en rotation du pneumatique 12 et on introduit les moyens d'acquisition d'images internes à l'intérieur du pneumatique en vue d'acquérir une image d'une zone angulaire d'angle prédéterminée de sa surface interne. Les moyens d'acquisition internes sont de préférence introduits par le passage central délimité par le plateau 18 annulaire et positionnés de sorte à inspecter une portion de l'espace intérieur du pneumatique 12 située entre le plan de symétrie du pneumatique et le second bourrelet 12c latéral et totalement dégagée de la présence des galets 22 à 30. Lors de cette étape, les moyens d'acquisition d'images externes sont également disposés à l'extérieur du pneumatique 12 en vue d'acquérir une image d'une zone angulaire de sa surface extérieure, de préférence située entre le plan de symétrie du pneumatique et le second bourrelet 12c.

Ensuite, lors d'une huitième étape, on entraîne en rotation le pneumatique 12 de sorte à ce qu'il effectue une rotation de 360 degrés autour de son axe X-X' afin que les moyens d'acquisition d'images qui sont fixes acquièrent l'ensemble des images permettant de former l'image de la première moitié de la surface intérieure du pneumatique 12 située entre le plan de symétrie du pneumatique et le second bourrelet 12c latéral et de la surface extérieure correspondante.

Enfin, lors d'une neuvième et dernière étape, on arrête l'entraînement en rotation du pneumatique 12, on retire les moyens d'acquisition d'images internes et externes, on relève axialement les galets 22, puis on ramène les cadres 36 radialement vers l'intérieur dans la position escamotée de sorte à pouvoir procéder à l'extraction du pneumatique 12.

Le pneumatique 12 peut alors être retourné afin de recommencer la séquence d'opérations telle que décrite ci-dessus pour acquérir l'image de la seconde moitié de la surface intérieure et de la surface extérieure du pneumatique. On obtient alors l'image complète du pneumatique 12 en juxtaposant les première et seconde images obtenues.

Lors de l'entraînement en rotation du pneumatique 12 autour de son axe X-X', le bourrelet associé aux modules 20 de préhension et de centrage roule sur les galets 22 à 30 en étant pincé axialement et maintenu radialement du côté intérieur par lesdits galets. Les galets 22 permettent l'écartement axial du bourrelet par appui du côté intérieur et les galets 24, 26 assurent la butée et le maintien axial du bourrelet du côté extérieur. Les galets 28, 30 assurent le centrage et le maintien radial du bourrelet. Le flanc et le bourrelet associé sont ainsi maintenus axialement et radialement de façon stable, précise et répétitive lors de l'entraînement en rotation réalisé par l'intermédiaire de l'autre bourrelet du pneumatique. Le bourrelet associé aux modules 20 de préhension et de centrage est maintenu dans une position stable fermée à l'état dégonflé et légèrement écartée axialement, ce qui permet d'acquérir de façon simultanée l'image de l'intérieur et de l'extérieur du pneumatique 12.

Dans l'exemple de réalisation illustré, chaque module de préhension et de centrage comprend un unique galet 22 d'écartement, deux galets 24, 26 de maintien dans la position écartée et deux galets 28, 30 de centrage. Il est également possible, sans sortir du cadre de l'invention, de prévoir un nombre différent de galets pour chacun de ces trois types de galets et/ou un agencement relatif différent.

Dans l'exemple de réalisation illustré, le dispositif comprend une pluralité de modules de préhension et de centrage du second bourrelet latéral du pneumatique. Le nombre de modules de préhension et de centrage est lié au nombre de moyens d'acquisition d'images destinés à être utilisés. En variante, il est possible d'utiliser un seul module lorsqu'un seul moyen d'acquisition d'images est prévu de sorte à obtenir un bon centrage du bourrelet du pneumatique dans la zone angulaire du pneumatique inspectée.

Le dispositif 10 tel qu'illustré sur les figures qui permet d'assurer le maintien axial, le centrage radial et l'entraînement circonférentiel en rotation du pneumatique 12 est disposé selon une orientation à axe vertical avec verrouillage du bourrelet supérieur du pneumatique et maintien et centrage du bourrelet inférieur. En variante, il pourrait être possible de prévoir une disposition axiale inversée. Dans une autre variante, il est également possible d'utiliser le dispositif selon une orientation à axe horizontal ou à axe oblique.

## Revendications

1. Dispositif de maintien et d'entraînement en rotation d'un pneumatique du type comprenant une bande de roulement et des premier et second bourrelets latéraux, le dispositif comprenant des moyens de centrage (14) aptes à permettre le centrage du premier bourrelet latéral du pneumatique, des moyens de verrouillage (16) aptes à verrouiller ledit bourrelet dans la position centrée, et des moyens d'entraînement aptes à entraîner en rotation le pneumatique autour de son axe (X-X'), le dispositif comprenant en outre au moins un module de préhension et de centrage (20) du second bourrelet latéral du pneumatique pourvu d'au moins un galet d'écartement interne (22) apte à venir axialement en appui contre la face interne du second bourrelet latéral, et d'au moins un galet de maintien externe (24) apte à venir axialement en appui contre la face externe opposée dudit second bourrelet, lesdits galets d'écartement et de maintien s'étendant chacun selon un axe orienté radialement et étant chacun monté libre en rotation autour dudit axe, **caractérisé en ce que** ledit module de préhension et de centrage (20) est pourvu en outre d'au moins un galet de centrage (28) apte à venir radialement en appui contre ledit second bourrelet latéral et s'étendant selon un axe orienté axialement et étant monté libre en rotation autour dudit axe.

2. Dispositif selon la revendication 1, dans lequel ledit module (20) de préhension et de centrage comprend au moins deux galets de centrage (28, 30).

3. Dispositif selon la revendication 2, dans lequel les galets de centrage (28, 30) sont disposés circonférentiellement de part et d'autre du galet d'écartement interne (22).

4. Dispositif selon l'une quelconque des revendications précédentes, dans lequel le ou les galets de centrage (28, 30) sont aptes à venir radialement en appui contre l'alésage du second bourrelet latéral du pneumatique.

5. Dispositif selon l'une quelconque des revendications précédentes, dans lequel le ou les galets de centrage (28, 30) sont cylindriques.

6. Dispositif selon l'une quelconque des revendications précédentes, dans lequel le galet d'écartement interne (22) dudit module est mobile axialement en translation par rapport aux galets de maintien externe (24) et de centrage (28).

7. Dispositif selon la revendication 6, dans lequel ledit module de préhension et de centrage (20) comprend une embase (32) de montage sur laquelle sont montés les galets de maintien externe (24) et de centrage (28), et une tige (34) montée coulissante sur ladite embase et supportant le galet d'écartement interne (22).

8. Dispositif selon l'une quelconque des revendications précédentes, dans lequel ledit module de préhension et de centrage (20) comprend au moins deux galets de maintien externe (24, 26).

9. Dispositif selon la revendication 8, dans lequel les galets de maintien externe (24, 26) sont disposés circonférentiellement de part et d'autre du galet d'écartement interne (22).

10. Dispositif selon la revendication 8 ou 9, dans lequel le galet d'écartement interne (22) est disposé sensiblement au milieu d'un secteur angulaire délimité par les deux galets de maintien externe (24, 26).

11. Dispositif selon l'une quelconque des revendications précédentes, dans lequel ledit module de préhension et de centrage (20) comprend un unique galet d'écartement interne (22).

12. Dispositif selon l'une quelconque des revendications précédentes, comprenant un plateau (18) fixe sur lequel est monté mobile radialement en translation ledit module de préhension et de centrage (20).

13. Dispositif selon l'une quelconque des revendications précédentes, comprenant une pluralité de modules de préhension et de centrage (20) du second bourrelet latéral du pneumatique identiques entre eux.

14. Dispositif selon la revendication 13, dans lequel les modules de préhension et de centrage sont espacés les uns par rapport aux autres de manière régulière dans le sens circonférentiel.

15. Procédé d'inspection d'un pneumatique du type comprenant une bande de roulement et des premier et second bourrelets latéraux à l'aide d'un dispositif selon l'une quelconque des revendications 1 à 14, comprenant les étapes au cours desquelles :
- on centre et on verrouille le premier bourrelet latéral du pneumatique sur les moyens de centrage,
- on réalise un déplacement axial relatif entre le pneumatique et le galet d'écartement interne pour positionner axialement ledit galet à une hauteur différente de celle de la face interne du second bourrelet latéral du pneumatique en étant situé dans l'espace intérieur du pneumatique,
- on déploie radialement le module de préhension et de centrage pour amener le galet de centrage à une cote inférieure au seat du pneumatique,
- on active l'entraînement en rotation du pneumatique,
- on réalise un déplacement axial relatif entre le pneumatique et le galet d'écartement interne pour pincer axialement le second bourrelet latéral du pneumatique entre les galets d'écartement interne et de maintien externe,
- on déploie radialement le module de préhension et de centrage pour amener le galet de centrage radialement en appui contre le second bourrelet latéral à une cote correspondante au seat du pneumatique, et
- on dispose des moyens d'acquisition d'images internes et externes pour acquérir des images de zones angulaires des surfaces interne et externe du pneumatique.

## Patentansprüche

1. Vorrichtung zum Halten und rotatorischen Antreiben eines Luftreifens des Typs, der ein Laufband und einen ersten und einen zweiten seitlichen Wulst umfasst, wobei die Vorrichtung Zentriermittel (14), die die Zentrierung des ersten seitlichen Wulstes des Luftreifens ermöglichen können, Verriegelungsmittel (16), die den Wulst in der zentrierten Position verriegeln können, und Antriebsmittel, die den Luftreifen um seine Achse (X-X') rotatorisch antreiben können, enthält, wobei die Vorrichtung außerdem wenigstens ein Greif- und Zentriermodul (20) für den zweiten seitlichen Wulst des Luftreifens enthält, das mit wenigstens einer inneren Abstandsrolle (22) versehen ist, die sich axial an der inneren Fläche des zweiten seitlichen Wulstes abstützen kann, und mit wenigstens einer äußeren Halterolle (24) versehen ist, die sich axial an der äußeren Fläche gegenüber dem zweiten Wulst abstützen kann, wobei sich die Abstands- und Halterollen jeweils längs einer radial orientierten Achse erstrecken und jeweils um die Achse frei drehbar sind, **dadurch gekennzeichnet, dass** das Greif- und Zentriermodul (20) außerdem mit wenigstens einer Zentrierrolle (28) versehen ist, die sich radial an dem zweiten seitlichen Wulst abstützen kann und sich längs einer axial orientierten Achse erstreckt und um die Achse frei drehbar montiert ist.

2. Vorrichtung nach Anspruch 1, wobei das Greif- und Zentriermodul (20) wenigstens zwei Zentrierrollen (28, 30) enthält.

3. Vorrichtung nach Anspruch 2, wobei die Zentrierrollen (28, 30) in Umfangsrichtung beiderseits der inneren Abstandsrolle (22) angeordnet sind.

4. Vorrichtung nach einem der vorhergehenden Ansprüche, wobei sich die eine oder die mehreren Zentrierrollen (28, 30) radial an der Öffnung des zweiten seitlichen Wulstes des Luftreifens abstützen können.

5. Vorrichtung nach einem der vorhergehenden Ansprüche, wobei die eine oder die mehreren Zentrierrollen (28, 30) zylindrisch sind.

6. Vorrichtung nach einem der vorhergehenden Ansprüche, wobei die innere Abstandsrolle (22) des Moduls in Bezug auf die äußeren Halterollen (24) und Zentrierrollen (28) axial translatorisch beweglich sind.

7. Vorrichtung nach Anspruch 6, wobei das Greif- und Zentriermodul (20) eine Montagebasis (32) aufweist, an der die äußeren Halterollen (24) und Zentrierrollen (28) montiert sind, und einen Stift (34) aufweist, der an der Basis gleitend montiert ist und die innere Abstandsrolle (22) trägt.

8. Vorrichtung nach einem der vorhergehenden Ansprüche, wobei das Greif- und Zentriermodul (20) wenigstens zwei äußere Halterollen (24, 26) enthält.

9. Vorrichtung nach Anspruch 8, wobei die äußeren Halterollen (24, 26) in Umfangsrichtung beiderseits der inneren Abstandsrolle (22) angeordnet sind.

10. Vorrichtung nach Anspruch 8 oder 9, wobei die innere Abstandsrolle (22) im Wesentlichen in der Mitte eines Winkelsektors angeordnet ist, der durch die beiden äußeren Halterollen (24, 26) begrenzt ist.

11. Vorrichtung nach einem der vorhergehenden Ansprüche, wobei das Greif- und Zentriermodul (20) eine einzige innere Abstandsrolle (22) enthält.

12. Vorrichtung nach einem der vorhergehenden Ansprüche, die eine feste Platte (18) aufweist, an der das Greif- und Zentriermodul (20) radial translatorisch beweglich montiert ist.

13. Vorrichtung nach einem der vorhergehenden Ansprüche, die mehrere Greif- und Zentriermodule (20) des zweiten seitlichen Wulstes des Luftreifens, die alle gleich sind, enthält.

14. Vorrichtung nach Anspruch 13, wobei die Greif- und Zentriermodule in Umfangsrichtung regelmäßig voneinander beabstandet sind.

15. Verfahren zum Untersuchen eines Luftreifens des Typs, der ein Laufband und einen ersten und einen zweiten seitlichen Wulst enthält, mit Hilfe einer Vorrichtung nach einem der Ansprüche 1 bis 14, das die Schritte umfasst, in denen Folgendes ausgeführt wird:
- Zentrieren und Verriegeln des ersten seitlichen Wulstes des Luftreifens an den Zentriermitteln,
- Ausführen einer relativen axialen Verlagerung zwischen dem Luftreifen und der inneren Abstandsrolle, um die Rolle axial auf einer Höhe zu positionieren, die von jener der inneren Fläche des zweiten seitlichen Wulstes des Luftreifens verschieden ist, wobei sie sich in dem Innenraum des Luftreifens befindet,
- radiales Ausfahren des Greif- und Zentriermoduls, um die Zentrierrolle zu einer Seite unterhalb der Auflagefläche des Luftreifens zu führen,
- Aktivieren des rotatorischen Antriebs des Luftreifens,
- Ausführen einer relativen axialen Verlagerung zwischen dem Luftreifen und der inneren Abstandsrolle, um den zweiten seitlichen Wulst des Luftreifens zwischen den inneren Abstands- und äußeren Halterollen axial einzuklemmen,
- radiales Ausfahren des Greif- und Zentriermoduls, um die Zentrierrolle in eine radiale Abstützung an dem zweiten seitlichen Wulst zu einer der Auflagefläche des Luftreifens entsprechenden Seite zu führen, und
- Anordnen von inneren und äußeren Bilderfassungsmitteln, um Bilder von Winkelzonen von inneren und äußeren Oberflächen des Luftreifens zu erfassen.

## Claims

1. Device for holding and turning a tyre of the type comprising a tread and first and second lateral beads, the device comprising centring means (14) able to allow the first lateral bead of the tyre to be centred, locking means (16) able to lock the said bead in the centred position, and drive means able to turn the tyre about its axis (X-X'), the device further comprising at least one gripping and centring module (20) for the second lateral bead of the tyre provided with at least one internal separation roller (22) able to press axially against the internal face of the second lateral bead, with at least one external holding roller (24) able to come to bear axially against the opposite external face of the said second bead, the said spacing and holding rollers extending substantially radially and being mounted with the freedom to rotate about their respective axes, **characterized in that** said gripping and centring module (20) comprises at least one centring roller (28) able to come to bear radially against the said second lateral bead and extending substantially axially and being mounted with the freedom to rotate about its axe.

2. Device according to Claim 1, in which the said gripping and centring module (20) comprises at least two centring rollers (28, 30).

3. Device according to Claim 2, in which the centring rollers (28, 30) are arranged circumferentially on each side of the internal separating roller (22).

4. Device according to any one of the preceding claims, in which the centring roller or rollers (28, 30) are able to come to bear radially against the bore of the second lateral bead of the tyre.

5. Device according to any one of the preceding claims, in which the centring roller or rollers (28, 30) are cylindrical.

6. Device according to any one of the preceding claims, in which the internal separating roller (22) of the said module is capable of axial translational movement with respect to the external holding (24) and centring (28) rollers.

7. Device according to Claim 6, in which the said gripping and centring module (20) comprises a mounting base (32) on which the external holding (24) and centring (28) rollers are mounted and a rod (34) slidably mounted on the said base and supporting the internal separating roller (22).

8. Device according to any one of the preceding claims, in which the gripping and centring module (20) comprises at least two external holding rollers (24, 26).

9. Device according to Claim 8, in which the external holding rollers (24, 26) are positioned circumferentially on each side of the internal separating roller (22).

10. Device according to Claim 8 or 9, in which the internal separating roller (22) is positioned substantially in the middle of an angular sector delimited by the two external holding rollers (24, 26).

11. Device according to any one of the preceding claims, in which the said gripping and centring module (20) comprises a single internal separating roller (22).

12. Device according to any one of the preceding claims, comprising a fixed plate (18) on which the said gripping and centring module (20) is mounted with radial translational mobility.

13. Device according to any one of the preceding claims, comprising a plurality of mutually identical gripping and centring modules (20) for the second lateral bead of the tyre.

14. Device according to Claim 13, in which the gripping and centring modules are spaced apart uniformly in the circumferential direction.

15. Method for inspecting a tyre of the type comprising a tread and first and second lateral beads using a device according to any one of Claims 1 to 14, comprising the steps during which:
- the first lateral bead of the tyre is centred and locked on the centring means,
- a relative axial movement between the tyre and the internal spacing roller is brought about in order to position the said roller axially at a different height from that of the internal face of the second lateral bead of the tyre while being situated in the interior space of the tyre,
- the gripping and centring module is deployed radially to bring the centring roller to a dimension smaller than the seat of the tyre,
- the tyre turning drive is actuated,
- a relative axial movement between the tyre and the internal separating roller is brought about in order to trap the second lateral bead of the tyre axially between the internal spacing and external holding rollers,
- the gripping and centring module is deployed radially in order to bring the centring roller radially to bear against the second lateral bead at a dimension corresponding to the seat of the tyre, and
- internal and external image capture means are positioned to capture images of angular regions of the internal and external surfaces of the tyre.
